# EUROPÄISCHE PATENTANMELDUNG

(11) **EP 2 942 857 A1**
(43) Veröffentlichungstag der Anmeldung: **11.11.2015**
(21) Anmeldenummer: 14167419.2
(22) Anmeldetag: 07.05.2014
(51) Int. Cl.: H02K 1/18, H02K 1/26, H02K 15/02

(54) **Elektrisches Kfz-Nebenaggregeat**

(71) Anmelder: Pierburg Pump Technology GmbH, 41460 Neuss (DE)
(72) Erfinder: Dewenter, Stefan, 50733 Köln (DE)
(74) Vertreter: Patentanwälte ter Smitten Eberlein Rütten Partnerschaftsgesellschaft

(57) **Zusammenfassung**

Die Erfindung bezieht sich auf ein elektrisches Kfz-Nebenaggregat (10), das einen elektrischen Antriebsmotor (12) aufweist, wobei der Antriebsmotor (12) ein Stator- und/oder Rotor-Blechpaket (45) aufweist, das aus mindestens einem Satz (60,62) in axialer Richtung miteinander paketierten ferromagnetischen Blechen (46,48) besteht. Jedes Blech (46,48) eines Satzes (60,62) weist jeweils mindestens eine axiale Paketiernoppe (71-73) auf, die mit der korrespondierenden Paketiernoppe (71-73) eines axial benachbarten Blechs (46,48) einen Formschluss herstellt. Die Paketiernoppe (71-73) ist derart randnah angeordnet, dass der Noppenrand (77) der Paketiernoppe (71-73) lateral höchstens 1,0 mm beabstandet ist von dem nächstem Blechrand (81-83), Hierdurch wird die absolute magnetische Leitfähigkeit in diesem Bereich des Blechs erhöht.

## Beschreibung

Die Erfindung bezieht sich auf ein elektrisches Kfz-Nebenaggregat, das einen elektrischen Antriebsmotor aufweist.

Das Kfz-Nebenaggregat kann beispielsweise eine Flüssigkeitspumpe, eine Vakuumpumpe oder ein Steller sein. Im Bereich der Kfz-Technik existieren sehr hohe Anforderungen an den elektrischen Wirkungsgrad, die Baugröße und die Herstellungskosten.

Sowohl der Rotor als auch der Stator des Antriebsmotors können ein Leitkörper- Blechpaket aufweisen, durch das auf preiswerte Weise der den Magnetfluss leitende und konzentrierende Teil des Rotors und/oder des Stators gebildet wird. Hierzu werden eine Vielzahl von ferromagnetischen Blechen, die in einer Querebene zur Antriebsmotor-Axialen stehen, zu einem entsprechenden Blechpaket paketiert. Um die exakte radiale Ausrichtung der einzelnen Bleche zueinander sicherzustellen, sind die Bleche eines Paketier-Satzes jeweils mit identischen und miteinander korrespondierenden Paketiernoppen versehen, die ineinandergreifen, und auf diese Weise sicherstellen, dass alle Bleche eines Paketier-Satzes axial exakt miteinander fluchten.

Die Paketiernoppen werden durch geeignete materialverformende Verfahren bzw. Werkzeuge in die Bleche eingebracht, insbesondere durch Stanzen, Tiefziehen et cetera. Hierdurch wird aber das Gefüge im Bereich der Paketiernoppen derart verändert, dass der die magnetische Leitfähigkeit im Bereich der Paketiernoppe erheblich verringert ist. Insbesondere bei kleineren elektrischen Antriebsmotoren, wie sie in Kfz-Nebenaggregaten immer häufiger zum Einsatz kommen, können die Paketiernoppen mit einem typischen Nenndurchmesser von 1 mm bis 2 mm die gesamte magnetische Leitfähigkeit des betreffenden Blechpakets negativ beeinflussen. Durch die verschlechterte absolute magnetische Leitfähigkeit verschlechtert sich auch der Wirkungsgrad des Antriebsmotors insbesondere im Bereich seiner Höchstleistung, da hierbei an Engstellen Sättigungseffekte in dem Leitkörper-Blechpaket auftreten können.

Aufgabe der Erfindung ist es vor diesem Hintergrund, ein Kfz-Nebenaggregat mit einem elektrischen Antriebsmotor mit einem verbesserten elektromagnetischen Wirkungsgrad zu schaffen.

Diese Aufgabe wird erfindungsgemäß gelöst mit den Merkmalen des Anspruchs 1.

Der Antriebsmotor des elektrischen Kfz-Nebenaggregats weist ein Stator-und/oder ein Rotor-Blechpaket auf, das aus mindestens einem Satz in axialer Richtung hintereinander und miteinander paketierten identischen ferromagnetischen Blechen besteht. Jedes Blech eines Satzes weist mindestens eine axiale Paketiernoppe auf, die mit der korrespondierenden Paketiernoppe des axial benachbarten Blechs einen Formschluss herstellt, indem der Noppen-Hügel in die Noppen-Mulde des benachbarten Blechs eingreift. Mindestens eine Paketiernoppe ist derart angeordnet, dass der Noppenrand der Paketiernoppe lateral höchstens 1,0 mm beabstandet ist von dem nächsten Blechrand des betreffenden Blechs. Die Paketiernoppe ist also nicht mittig in einer Magnetfluss- Passage angeordnet, sondern am Rande einer Magnetfluss-Passage. Die Noppen können oval oder anders ausgeformt sein, sind bevorzugt aber kreisrund geformt.

Auch im Randbereich einer Paketiernoppe außerhalb des eigentlichen Noppenrandes ist die magnetische Leitfähigkeit wegen des veränderten Gefüges nach dem Stanzen der Paketiernoppe erheblich schlechter als im noppenfrefen Bereich des betreffenden Blechs. Durch die randseitige Anordnung der Paketiernoppe überschneidet sich wenigstens ein (kleiner) Teil des veränderten Blechgefüges mit dem Blechrand, so dass die gesamte magnetische Leitfähigkeit in der betreffenden Passage des Blechs besser ist, als wenn die Paketiernoppe beispielsweise mittig in der entsprechenden Passage angeordnet wäre.

Vorzugsweise ist die Paketiernoppe derartig randseitig angeordnet, dass der Noppenrand der Paketiernoppe sich mit dem Blechrand geometrisch überschneidet. Der Paketiernoppe fehlt hierdurch ein durch eine Sehne, die von dem Blechrand gebildet wird, definierter Bereich einer umfangsmäßig vollständig geschlossenen Paketiernoppe. Hierdurch wird die absolute magnetische Leitfähigkeit in der betreffenden Passage entsprechend erhöht und verbessert.

Die geometrische Überschneidung der Paketiernoppe mit dem Blechrand beträgt vorzugsweise mindestens 30 %, und beträgt besonders bevorzugt mindestens 45 % der Fläche einer vollständig geschlossenen Paketiernoppe. Hierdurch kann die absolute magnetische Leitfähigkeit in der betreffenden Passage unter Umständen erheblich verbessert werden, insbesondere bei kleinen Antriebsmotoren mit entsprechend feingliedrigen Blechpaketen.

Gemäß einer bevorzugten Ausgestaltung der Erfindung ist das Blechpaket Teil eines feststehenden Motor-Stators und trägt das Blechpaket mehrere Statorspulen. Der Motor-Stator ist bevorzugt ein Außen-Stator, in dem ein innenlaufender Motorrotor drehbar gelagert ist.

Vorzugsweise besteht das Stator-Blechpaket aus zwei Blech-Sätzen, die formschlüssig axial zusammen geschoben sind. Der eine Blech-Satz bildet hierbei bevorzugt die Polzähne und der andere Blech-Satz den vorzugsweise außenliegenden Rückschlussring, der die Polzähne magnetisch miteinander verbindet.

Gemäß einer bevorzugten Ausgestaltung sind im Bereich eines Polzahns zwei Paketiernoppen vorgesehen, die bezüglich einer polzahnmittigen Radialen nicht spiegelsymmetrisch zueinander angeordnet sind. Bezogen auf den in dem Polzahn radial verlaufenden Magnetfluss stehen die beiden Paketiernoppen nicht in derselben Querebene, bezogen auf die Orientierung des Magnetflusses in dem Polzahn. Die beiden Polzahn-Paketiernoppen sind also, in Flussrichtung des magnetischen Flusses betrachtet, hintereinander an dem Polzahn platziert, jedoch nicht auf gleicher Höhe. Auf diese Weise werden zwei in Flussrichtung des Magnetflusses betrachtet hintereinander liegende einseitige Verengungen in dem Polzahn realisiert, eine zweiseitige Verengung bezüglich der magnetischen Leitfähigkeit jedoch vermieden. Die absolute Sättigungsgrenze im Bereich des Polzahns wird auf diese Weise entsprechend erhöht, so dass sich auch der magnetische Wirkungsgrad bei Höchstleistung entsprechend verbessert.

Vorzugsweise haben die beiden Polzahn-Paketiernoppen einen verschiedenen radialen Abstand zur Antriebsmotor-Axialen, die die Drehachse des Antriebsmotors bildet.

Gemäß einer bevorzugten Ausgestaltung sind an dem Rückschlussring-Blechen die Paketiernoppen winkelhalbierend zwischen zwei benachbarten Polzähnen angeordnet. In diesen Bereichen weist der Rückschlussring jeweils einen in Umfangsrichtung relativ großen Querschnitt auf, da hier keine entsprechenden Ausnehmungen zur Herstellung eines Formschluss mit einem Polzahn vorgesehen werden müssen. Hierdurch wird die magnetische Leitfähigkeit des Rückschlussrings in Umfangsrichtung unter Umständen erheblich verbessert.

Im Folgenden wird unter Bezugnahme auf die Zeichnungen ein Ausführungsbeispiel der Erfindung näher erläutert. Es zeigen:
Figur 1 einen Längsschnitt eines elektrischen Kfz-Nebenaggregats, das einen elektrischen Antriebsmotor aufweist,
Figur 2 eine axiale Draufsicht auf einen Sektor eines Stator-Blechpakets des Antriebsmotors der Figur 1, und
Figur 3 eine Seitenansicht des Stator-Blechpakets der Figur 2.

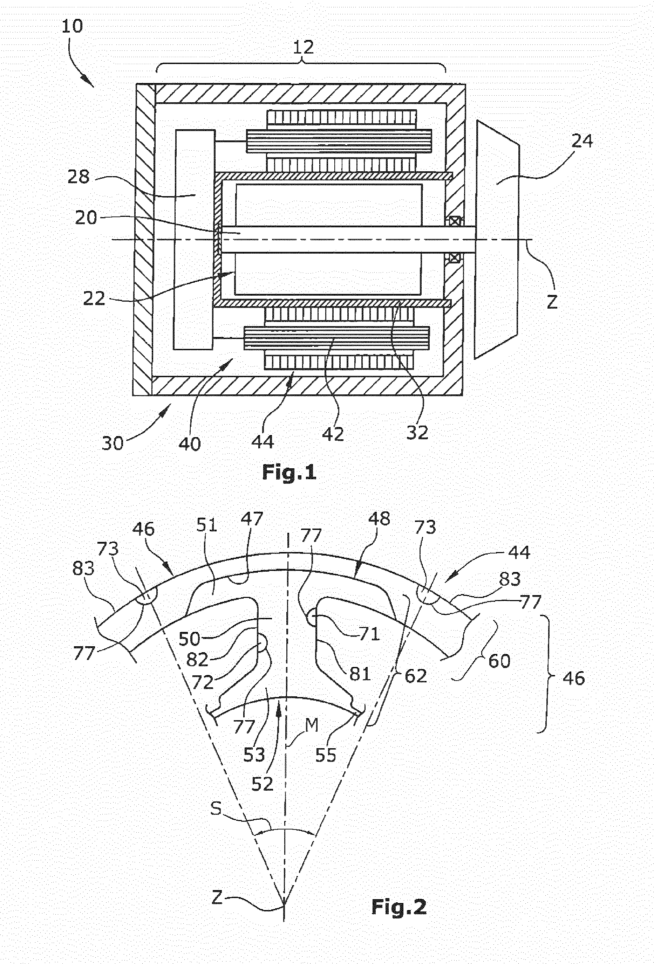

In der Figur 1 ist ein elektrisches Kfz-Nebenaggregat 10 dargestellt, das vorliegend als eine Kfz-Kühlmittelpumpe ausgebildet ist. Das Kfz-Nebenaggregat 10 weist einen elektrischen Antriebsmotor 12 auf, der ein Impeller-Pumpenrad 24 antreibt. Der Antriebsmotor 12 ist als sogenannter Spaltrohr- bzw. Spalttopf-Antriebsmotor ausgebildet. Der elektronisch kommutierte Antriebsmotor 12 weist einen außenliegenden bespulten Motorstator 40 auf, der durch ein zylindrisches Spaltrohr 32 flüssigkeitsdicht getrennt ist von dem permanentmagnetischen Motorrotor 22, der drehfest auf einer Rotorwelle 20 fixiert ist. Auch das Pumpenrad 24 ist drehfest auf der Rotorwelle 20 fixiert. Die Rotorwelle 20 dreht sich um eine Antriebsmotor-Axiale Z.

Der Motorstator 40 weist einen Leitkörper 44 und mehrere Statorspulen 42 auf, die auf dem Leitkörper 44 aufgewickelt sind. Der bürstenlose Antriebsmotor 12 weist eine elektronische Motorsteuerung 28 auf, die die elektronische Kommutierung vornimmt und durch die die Statorspulen 42 mit elektrischer Energie versorgt werden. Der Antriebsmotor 12 weist ein Gehäuse 30 auf, das das Spaltrohr 32 trägt und den Motorstator 40 und die Motorsteuerung 28 umgibt und abschirmt.

In der Figur 2 ist der Leitkörper 44 in Seitenansicht dargestellt. Der Leitkörper 44 wird durch ein Stator-Blechpaket 45 gebildet, das aus zwei Sätzen 60,62 jeweils miteinander paketierten und identischen ferromagnetischen Blechen 46,48 besteht, nämlich den Pol-Blechen 48 und den Rückschluss-Blechen 46.

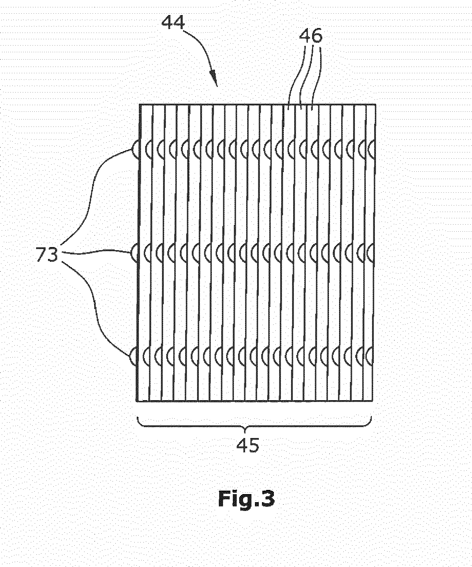

Ein 60°-Sektor S des Stator-Blechpakets 45 ist in der Figur 3 in axialer Ansicht dargestellt. Jedes Pol-Blech 48 ist 6-polig ausgebildet, wobei jeder Polzahn 52 des Pol-Blechs 48 im wesentlichen von einem radial inneren Polschuh 53, einem Polhals 50, um den jeweils eine Statorspule 42 gewickelt wird, und einen T- förmigen Kopplungskörper 51 gebildet wird. Die Polschuhe 53 eines Pol-Blechs 48 sind durch dünne Verbindungsstege 55 in Umfangsrichtung miteinander verbunden. Im Bereich des schlanken Polhalses 50 sind zwei Paketiernoppen 71,72 vorgesehen, die sich mit dem betreffenden Polhals-Blechrand 81,82 jeweils zu ca. 50 % überschneiden. Die Noppenränder 77 beider Paketiernoppen 71,72 schneiden sich mit dem betreffenden Polhals-Blechrand 81,82 jeweils derart, dass die Noppenränder 77 jeweils ungefähr einen Halbkreis bilden. Auf diese Weise sind zwei Halb-Paketiernoppen 71,72 gebildet.

Wie in der Figur 2 gut zu erkennen ist, sind die beiden Polzahn-Paketiernoppen 71,72 nicht spiegelsymmetrisch zu einer Polzahn-Winkelhalbierenden M angeordnet, sondern radial versetzt zueinander angeordnet. Der radiale Abstand der beiden Polzahn-Paketiernoppen 71,72 von der Antriebsmotor-Axialen Z ist verschieden. Durch die beiden Halb-Paketiernoppen 71,72 wird eine eindeutige radiale Ausrichtung von zwei axial benachbarten Pol-Blechen 48 sichergestellt. Durch die Halbierung der beiden Paketiernoppen 71,72 und durch den radialen Versatz der beiden Paketiernoppen 71,72 zueinander wird der absolute magnetische Widerstand in radialer Richtung im Bereich des Polhalses 50 so gering wie möglich gehalten. Hierdurch wird der Wirkungsgrad des elektrischen Antriebsmotors 12 verbessert.

Das Rückschluss-Blech 46 ist im Wesentlichen als Kreisring ausgebildet und weist sechs Kopplungs-Ausnehmungen 47 auf, in die die Kopplungskörper 51 des jeweiligen Pol-Blechs 48 formschlüssig eingreifen. An den Sektor-Grenzen zwischen zwei Polzähnen 52 sind an der radialen Außenseite des Rückschluss-Blechs 46 sechs Paketiernoppen 73 vorgesehen, die ebenfalls als Halb-Paketiernoppen ausgebildet sind, so dass sich ihr Noppenrand 77 jeweils schneidet mit dem radial äußeren Blechrand 83 des Rückschluss-Blechs 46.

Die Paketiernoppen 71-73 sind bevorzugt kreisrund und haben bevorzugt einen Nenndurchmesser von 1 bis 2 m.

Bei der Herstellung des Leitkörpers 44 werden zunächst alle Pol-Bleche 48 zu einem Satz 62 und alle Rückschluss-Bleche 46 zu einem Satz 60 zusammengesetzt und axial fixiert, beispielsweise durch leichtes verklebten der Bleche 46,48 eines Satzes 60,62 miteinander. Anschließend werden die sechs Polzähne 52 von radial außen bewickelt, so dass auf diese Weise die sechs Statorspulen 42 gebildet werden. Schließlich wird der Rückschluss-Blech-Satz 60 in axialer Richtung derart auf den Pol-Blech-Satz 62 aufgeschoben, dass die sechs Kopplungskörper 51 jeweils vollständig in die korrespondierenden Ausnehmungen 47 eingreifen.

## Patentansprüche

1. Elektrisches Kfz-Nebenaggregat (10), das einen elektrischen Antriebsmotor (12) aufweist, wobei der Antriebsmotor (12) ein Stator- und/oder Rotor-Blechpaket (45) aufweist, das aus mindestens einem Satz (60,62) in axialer Richtung miteinander paketierten ferromagnetischen Blechen (46,48) besteht,
wobei jedes Blech (46,48) eines Satzes (60,62) jeweils mindestens eine axiale Paketiernoppe (71-73) aufweist, die mit der korrespondierenden Paketiernoppe (71-73) eines axial benachbarten Blechs (46,48) einen Formschluss herstellt,
wobei die Paketiernoppe (71-73) derart randnah angeordnet ist, dass der Noppenrand (77) der Paketiernoppe (71-73) lateral höchstens 1,0 mm beabstandet ist von dem nächstem Blechrand (81-83).

2. Elektrisches Kfz-Nebenaggregat (10) nach Anspruch 1, wobei sich der Noppenrand (77) der Paketiernoppe (71-73) mit dem Blechrand (81-83) überschneidet.

3. Elektrisches Kfz-Nebenaggregat (10) nach Anspruch 2, wobei der Paketiernoppe (71-73) durch die Überschneidung mindestens 30 %, besonders bevorzugt mindestens 45 %, der Fläche einer Voll-Paketiernoppe fehlen.

4. Elektrisches Kfz-Nebenaggregat (10) nach einem der vorangegangenen Ansprüche, wobei das Blechpaket (45) Teil eines Motorstators (40) ist und mehrere Statorspulen (42) trägt.

5. Elektrisches Kfz-Nebenaggregat (10) nach Anspruch 4, wobei das Stator-Biechpaket (45) aus zwei Blech-Sätzen (60,62) besteht, die formschlüssig axial zusammengeschoben sind.

6. Elektrisches Kfz-Nebenaggregat (10) nach Anspruch 5, wobei der eine Blech-Satz (62) Polzähne (52) und der andere Blech-Satz (60) einen Rückschlussring bildet.

7. Elektrisches Kfz-Nebenaggregat nach einem der vorangegangenen Ansprüche, wobei im Bereich eines Polzahnes (52) zwei Paketiernoppen (71,72) vorgesehen sind, die bezüglich einer polzahnmittigen Radialen (M) nicht symmetrisch zueinander angeordnet sind.

8. Elektrisches Kfz-Nebenaggregat nach Anspruch 7, wobei die beiden Polzahn-Paketiernoppen (71,72) nicht den gleichen radialen Abstand zur Antriebsmotor-Drehachse (Z) haben.

9. Elektrisches Kfz-Nebenaggregat nach einem der vorangegangenen Ansprüche, wobei an dem Rückschlussring die Paketiernoppen (73) winkelhalbierend zwischen zwei benachbarten Polzähnen (52) angeordnet sind.
